# EUROPEAN PATENT SPECIFICATION

(11) **EP 0 283 078 B1**
(45) Date of publication and mention of the grant of the patent: **14.05.1997**
(21) Application number: 88200410.4
(22) Date of filing: 07.03.1988
(51) Int. Cl.: A01B 33/12

(54) **A soil cultivating machine**
Bodenbearbeitungsmaschine
Machine pour travailler le sol

(30) Priority: 10.03.1987 NL 8700564; 25.09.1987 NL 8702288; 09.10.1987 NL 8702401
(43) Date of publication of application: 21.09.1988
(73) Proprietor: C. van der Lely N.V., NL-3155 PD Maasland (NL)
(72) Inventor: Van der Lely, Ary, Maasland (NL); Bom, Cornelis Johannes Gerardus, Rozenburg (NL)
(74) Representative: Mulder, Herman

(56) References cited:
- EP-A- 0 118 868
- FR-A- 2 385 306
- FR-A- 2 388 473
- FR-A- 2 416 634
- FR-A- 2 564 687
- GB-A- 2 088 683
- GB-A- 2 139 462

## Description

The invention relates to a soil cultivating machine comprising a plurality of soil working members arranged in a row, each being provided with two downwardly extending tines, which are power-driven by gear-wheels arranged inside a frame portion in side-by-side relationship in a row which extends transversely to the direction of operative travel (A) of the machine, which soil working members are rotatable about upwardly directed axes, while on both ends of the row of soil working members there is provided an upwardly extending plate disposed at least substantially parallel to the direction of operative travel (A), which plate co-operates with the tines of the outermost one of the row of soil-working members during operation so as to obtain a crumbling of the soil, which plate is deflectable as a whole with respect to the frame portion, the plate having, viewed transverse to the direction of operative travel of the machine, a width exceeding the width of the working member with which said plate is co-operating, the plate being vertically and horizontally movable relative to the remainder of the machine, the machine being provided with a supporting roller in order to change the working depth of the machine said machine further being provided with a speed variator by which the speed of said soil working members can be changed.

From EP-A-0118868 such a machine is known which shows a side plate which is provided with slots under an angle of about 45° with the horizontal, through which matching bolts are fed, by means of which the sideplate is connected with the frame portion. This construction can be used in two different manners. With the bolts screwed tightly, the sideplate can be fixed in different positions relative to the frame portion, a more rearward fixation hereby necessarily being combined with a fixation on a higher level and a more forward fixation hereby being combined with a fixation of the sideplate on a lower level. In the other way of use the bolts are not screwed tightly and the sideplate is during work able to move freely within the slots upwardly and backwardly, or downwardly and forwardly, thus adapting itself to a possibly varying depth of the soil surface or otherwise to objects in or on the soil, for instance stones.

However, in both cases any forward or rearward movement of the plate is coupled to a downward or upward movement, respectively. This dependency means a serious limitation of the proper use of the machine. It is found that machines as described above do not perform well under certain circumstances. Especially when the soil is to be cultivated at a large depth, a relatively large wall of earth is built up in front of the machine, which wall causes earth to find itself a way aside of the machine so that ridges or earth-walls are formed, which are undesirable in a seedbed. The size of the wall of earth will also change by changing the relative speed of the tines through the soil. Therefore it is desirable that the sideplate extends up to a point relatively far in front of the soil working members. In another case, when heavy soils are to be processed, large quantities of coarsely crumbled soil occur at the rear side of the soil working members. These clods of earth should remain within the working width of the machine, also when they are eventually crumbled further by a roller at the rear of the machine. It is therefore desirable to use a sideplate which covers a relatively large part behind the machine, again in order to prevent ridge building. Thus, in order to obtain a machine usable in at least the above decsribed circumstances, a sideplate should be designed with large dimensions in order to extend from relatively far in front of the machine to relatively far behind the machine. It is the object of the invention to come to a construction wherein it is not necessary to construct an over-dimensioned sideplate, while at least both above described soil working conditions can be dealt with in a proper way.

According to the invention this can be realized in that the plate is mounted to a supporting plate and is vertically adjustable relative to said supporting plate within a vertical or substantially vertical plane, adjusting means being provided by means of which the plate, which is at the rear side provided with an inwardly directed guide means, can also be adjusted with respect to said supporting plate into and fixed in a plurality of positions, forwardly or rearwardly, independent from said vertical adjustability, parallel to or substantially parallel to the direction of operative travel.

Thus the position of the plate can be adapted to the prevailing conditions, e.g. a wet soil or a dry one, the quantity of soil to be processed and/or the type of soil, so as to obtain an optimum co-operation between the plate and the outermost soil working mnember. A rearward movement of the plate results in a reduction of the space between the soil working members and a roller located therebehind, so that no disturbing ridges are produced when relatively large quantities of soil are being processed, which is the case when a comparatively large working depth is used.

For a better understanding of the invention and to show how the same may be carried into efect, reference will now be made, by way of example, to the accompanying drawings, in which:
Figure 1 is a plan view of a soil cultivating machine comprising a construction according to the invention;
Figure 2 is, to an enlarged scale, a view taken in the direction of the arrow II in Figure 1;
Figure 3 is a view taken in the direction of the arrow III in Figure 2;
Figure 4 is a view in accordance with Figure 2 of a second embodiment of the construction according to the invention;
Figure 5 is a view taken in the direction of the arrow VII in Figure 4;
Figure 6 is a view taken in the direction of the arrow VIII in Figure 5;
Figure 7 is a view in accordance with Figure 2 of a third embodiment of the plate, and
Figure 8 is a view in accordance with Figure 2 of a fourth embodiment of the plate according to the invention.

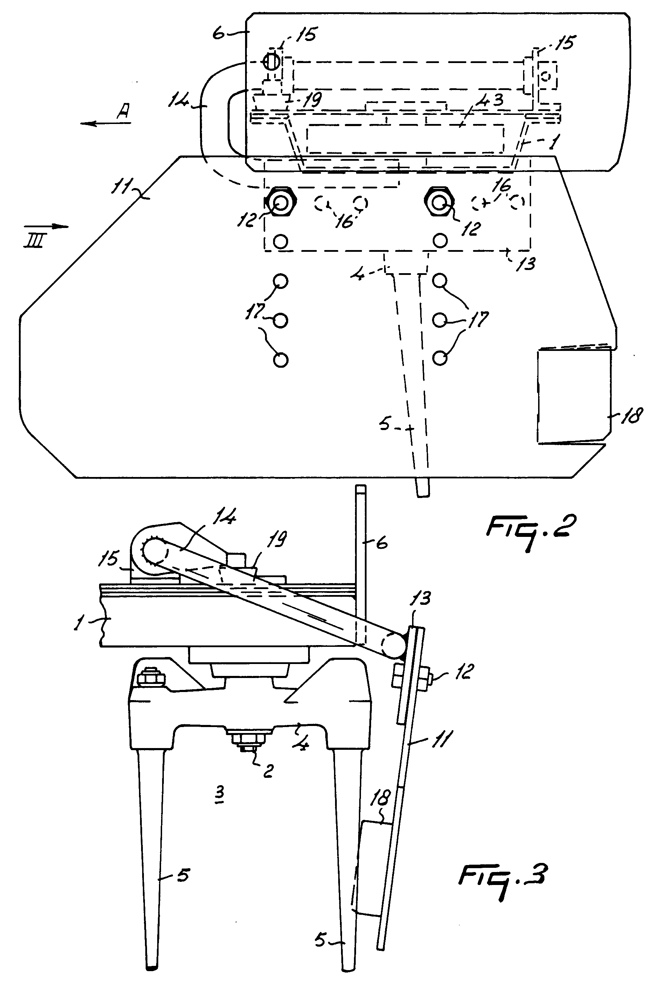

The implement shown in the drawings concerns a soil cultivating machine, in particular one for the preparation of a seed bed. The machine comprises a box-like frame portion 1 extending transversely to the direction of operative travel A thereof. Inside the frame portion 1 there are supported at equal interspaces of preferably 25 cms the shafts 2 of soil working members 3, which shafts extend in upward, preferably vertical, direction. At the end of each shaft 2 that projects from the bottom of the frame portion 1 there is provided a carrier 4 which extends at least substantially horizontally and near its ends is provided with downwardly extending soil working elements 5 afforded by tines. The ends of the frame portion 1 are closed by means of plates 6 extending upwardly and at least substantially parallel to the direction of operative travel A. Near its front side, each plate 6 is provided with a pivot pin 7, the arrangement being such that the longitudinal centre lines of said pivot pins are in alignment. About each of said pivot pins 7 there is arranged freely pivotably an arm 8 extending rearwardly along a plate 6. Each of the arms 8 is adjustable in height by means of an adjusting device 9 arranged near the rear side of the frame portion 1. The rear ends of the arms 8 being such that the arm is pivotable about a shaft extending in the direction of operative travel A. The supporting plate 13 has two subsequent rows of three apertures 16 each, which rows extend in the direction of operative travel A, while the plate 11 has two subsequent rows of superjacent apertures 17, the arrangement being such that each time an aperture 16 may correspond to an aperture 17 for a bolt 12 to be passed therethrough. The plate 11 can be adjusted in height relative to the supporting plate 13 by means of the apertures 17. The respective rows of apertures 17 are located on either side of the centre of the plate 11 (Figure 2). By means of the apertures 16 it is possible for the plate 11 to be adjusted forwardly and rearwardly, respectively, to some extent relative to the supporting plate 13. Thus, the position of the plate 11 can be adapted to the selected working depth of the soil working members 3. Moreover, in dependence on the type of soil and the working depth, it is possible for the plate 11 to be adjusted forwardly and rearwardly, respectively, to some extent, which forward movement allows of the processing of a larger quantity of soil between the plate 11 and the outermost soil working member 3, while said rearward movement of the plate 11 results in a more or less closing of the space between the soil working members 3 and the roller 10, thus obtaining an adjustment to the quantity of soil to be processed.

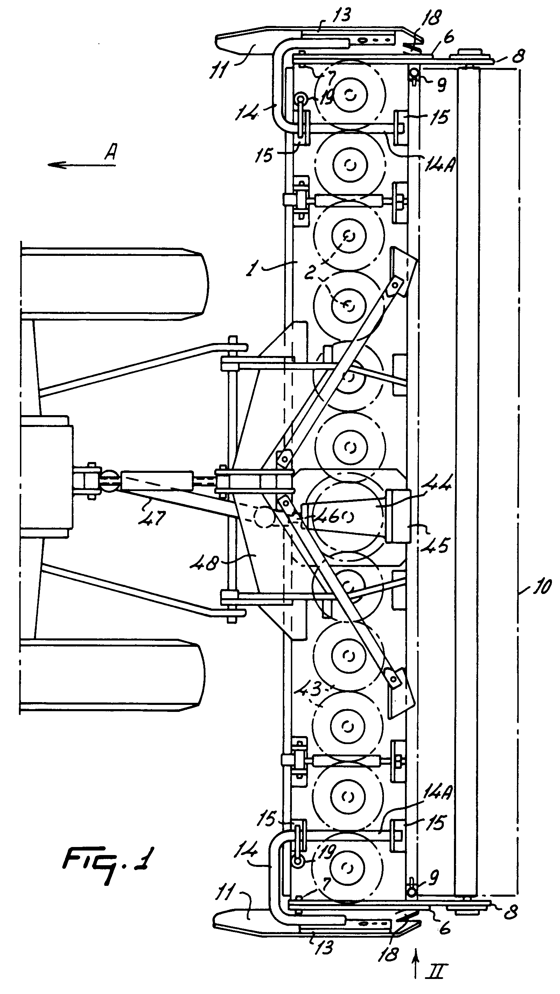

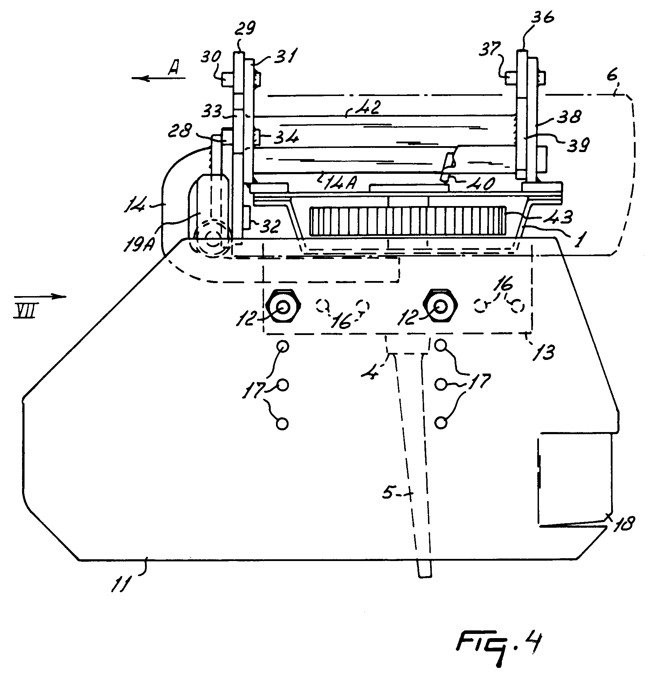

As is apparent from the drawings, each plate 11 is provided with an inwardly extending guide means 18. The lower side of the guide means 18 is located at some distance above the bottom side of the plate 11, the said guide means 18 being constituted by an inwardly bent rear portion of the plate 11 loosened along horizontal cuts. The guide means 18 encloses an angle of approximately 30° with the plane of the plate 11 and has a length approximately 1/9th that of the bottom side of said plate and a height approximately 1/4th that of said plate. Since the guide means 18 is located above the surface of the soil, it can prevent the formation of ridges without the occurrence of reaction forces urging the plate 11 outwardly during operation. The arm 14, to which the plate 11 is fitted by means of the supporting plate 13 and the bolts 12, is provided with a stop 19 which co-operates with the upper side of the frame portion 1 and, during operation, maintains the plate 11 in the position as shown in Figures 1 and 3. In this situation, the plate 11 encloses an angle of approximately 8° with a vertical plane in the direction of operative travel A.

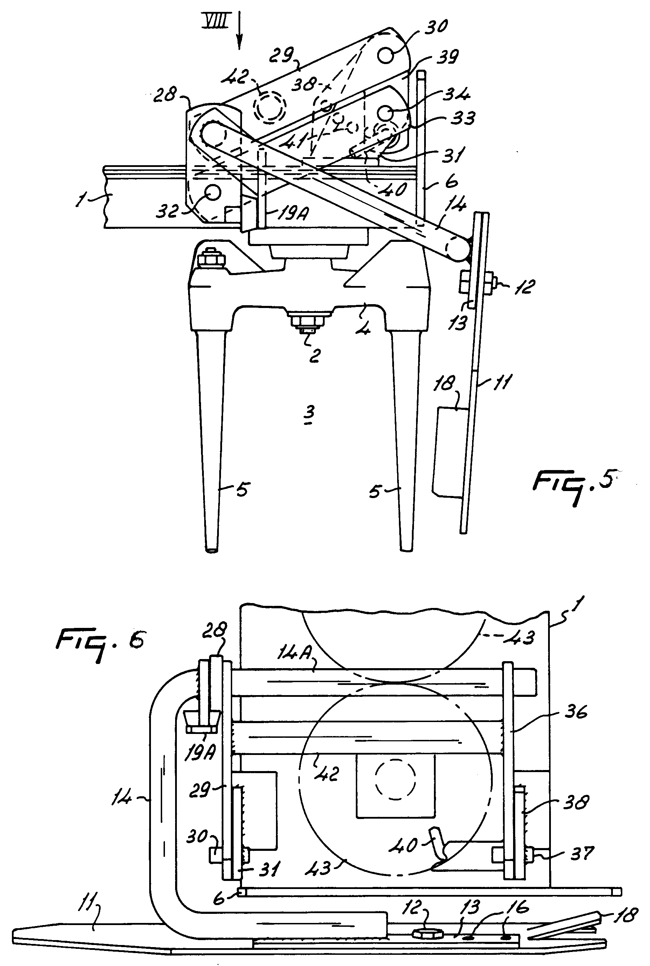

In the embodiment shown in Figures 4 to 6 the plate 11 is arranged in a manner as has been shown and defined with respect to the first embodiment. In this embodiment, however, the portion 14A of the arm 14 constitutes part of a parallelogram guide means. At its front side, the portion 14A is provided with a support 28 which together with an end of an arm 29 is mounted pivotably. The other end of the arm 29, which in plan view extends parallel to the frame portion 1 (Figure 6), is mounted pivotably by means of a shaft 30 on a support 31 arranged at the front side of the frame portion 1. On the lower side of the support 28 there is mounted pivotably an end of an arm 33 by means of a shaft 32. The other end of the arm 33 is mounted pivotably on the support 31 by means of a shaft 34. The arms 29 and 33 constitute a guide means, which is designed as a pivotal polygon in the form of a parallelogram. At its rear side, the portion 14A is connected pivotably to an end of an arm 36 which extends parallel to the arms 29 and 33. By means of a shaft 37 which is in alignment with shaft 30, the other end of the arm 36 is mounted pivotably on a support 38. The support 38 is attached to the rear side of the frame portion 1. At the side of the shaft 37, the arm 36 is provided with a lug 39 which, at its lower side, carries a spring-loaded pin 40. The pin 40 can be inserted into any one of a plurality of apertures 41 provided in the support 38 on the arc of a circle around the shaft 37. Between the arms 29 and 36 there is fitted a support 42. Within the box-like frame portion 1, each shaft 2 of a soil working member 3 is provided with a pinion 43, the arrangement being such that the pinions 43 on the shafts of adjacent soil working members are in driving connection with each other. Near the centre, the shaft 2 of a soil working member 3 is extended upwardly and by means of this extension reaches to into a gear box 44. Inside the gear box 44, the said extension is in driving connection via a bevel gear transmission and a speed variator 45 located at the rear side of the gear box with a shaft 46 which extends in the direction of operative travel A and projects beyond the gear box 44 at the front side. The end of the shaft 46 projecting beyond the gear box at the front side is connectable to the power take-off shaft of a tractor via an intermediate shaft 47. At its front side, the frame portion 1 is provided with a trestle 48 which has a three-point connection for coupling the machine to the three-point lifting hitch of a tractor.

The operation of the above-described implement is as follows.

During operation, the machine is coupled to the three-point lifting hitch of a tractor by means of the trestle 48 and is moved in the direction indicated by the arrow A. Hereby, the soil working members 3 can be rotated from the power take-off shaft of the tractor via the intermediate shaft 47 and the above-described transmission, whereby adjacent soil working members 3 rotate in opposite directions and cultivate by means of their soil working elements 5 at least adjoining strips of soil. During the movement of the machine in the direction indicated by the arrow A, there exists a co-operation between the outermost soil working members 3 and the respective plates 11, whereby the soil is crumbled and dispersed in a manner which is substantially similar to that obtained by the co-operation between two adjacent soil working members 3. As was already stated in the foregoing, in dependence on the working depth, the plate 11 according to the first embodiment can be adjusted in height, so that it always maintains the slightly inwardly directed position as indicated in Figure 3 and an optimum co-operation between an outermost soil working member and the plate is ensured. When the working depth is increased, it is also possible to adjust the plate into a more forward position, so that the larger quantity of soil to be processed can be crumbled and divided in an efficient manner. When heavy soils have to be processed, which involves the occurrence of large quantities of coarsely crumbled soil between the soil working members 3 and the roller 10, it is possible to adjust the plate into a more rearward position, so that, seen in side view, the space between the soil working members 3 and the front side of the roller 10 is screened off by the plate to a further extent.

In the embodiment shown in Figures 4 to 6 a height adjustment of the plate 11 is obtained with the aid of the parallelogram guide means comprising the arms 29 and 33 and extending transverse to the direction of operative travel A. In this case, the pin 40 is inserted into a different aperture 41 in the support 38. Also in this embodiment, it is possible to obtain a forward and rearward adjustment of the plate 11. In this embodiment, the plate is maintained in the position as shown in Figure 5 by means of a stop 19A, which is fitted on the arm 14 and bears against the support 28.

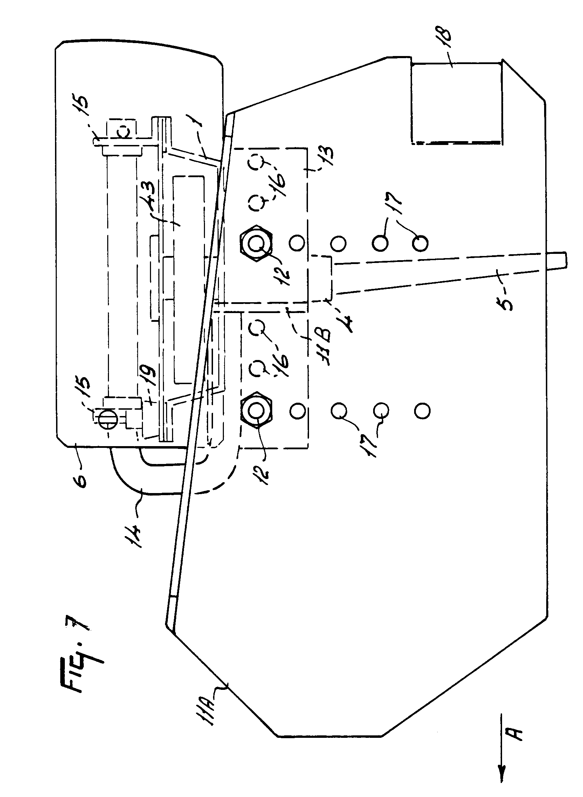

In Figure 7 there is shown as the third embodiment a plate 11A, which plate may also be fitted to the frame of the machine in the manners as described in the foregoing with reference to Figures 4 to 6. At its front side, the plate 11A extends from the horizontal bottom side obliquely upwardly and forwardly to approximately the middle thereof and subsequently merges via a vertical portion into an obliquely rearwardly and upwardly extending portion, the lower side of said latter portion being located at approximately two-thirds of the total height of the plate. The top side of the plate extends obliquely towards the rear at an angle of approximately 15° to the horizontal, while the rear side thereof corresponds to that of the plate 11 as described in the foregoing. In addition, the top side includes an outwardly bent edge, while, for the attachment of the arm, the end of the arm bears against a support 11B extending transversely to the plate.

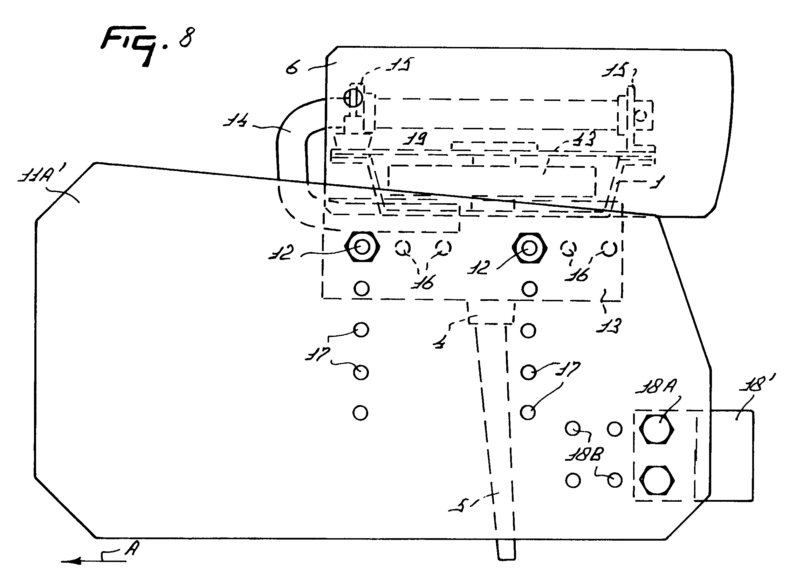

In Figure 8 there is shown a design of a plate 11Aʹ wherein the bent portion 18ʹ is mounted detachably and adjustably in the forward and rearward direction by means of bolts 18A and apertures 18B. At its front side, the said plate 11Aʹ has bevelled top and bottom edges, so that the upright, at least substantially vertical front side thereof extends over almost the entire height of the plate. The top side of the plate 11Aʹ does not include a bent edge.

## Claims

1. A soil cultivating machine comprising a plurality of soil working members (3) arranged in a row, each being provided with two downwardly extending tines, which are power-driven by gear-wheels (43) arranged inside a frame portion (1) in side-by-side relationship in a row which extends transversely to the direction of operative travel (A) of the machine, which soil working members (3) are rotatable about upwardly directed axes (2), while on both ends of the row of soil working members (3) there is provided an upwardly extending plate (11, 11A, 11A') disposed at least substantially parallel to the direction of operative travel (A), which plate co-operates with the tines of the outermost one of the row of soil-working members (3) during operation so as to obtain a crumbling of the soil, which plate is deflectable as a whole with respect to the frame portion, the plate having, viewed transverse to the direction of operative travel of the machine, a width exceeding the width of the working member with which said plate is co-operating, the plate being vertically and horizontally movable relative to the remainder of the machine, the machine being provided with a supporting roller (10) in order to change the working depth of the machine, said machine further being provided with a speed variator by which the speed of said soil working members can be changed, characterized in that the plate (11, 11A, 11A') is mounted to a supporting plate (13) and is vertically adjustable relative to said supporting plate (13) within a vertical or substantially vertical plane, adjusting means being provided by means of which the plate, which is at the rear side provided with an inwardly directed guide means (18, 18'), can also be adjusted with respect to said supporting plate into and fixed in a plurality of positions, forwardly or rearwardly, independent from said vertical adjustability, parallel to or substantially parallel to the direction of operative travel.

2. A soil cultivating machine as claimed in claim 1, characterized in that the supporting plate (13) is provided with a number of apertures (16) situated in a row extending in the direction of operative travel.

## Patentansprüche

1. Bodenbearbeitungsmaschine mit mehreren in einer Reihe angeordneten Bodenbearbeitungsgliedern (3), die jeweils mit zwei nach unten gerichteten Zinken versehen und durch Zahnräder (43) zwangläufig angetrieben sind, die innerhalb eines Gestellteiles (1) nebeneinander in einer Reihe quer zur Arbeitsrichtung (A) der Maschine angeordnet sind, wobei die Bodenbearbeitungsglieder (3) um aufwärts gerichtete Achsen (2) drehbar sind, wobei an beiden Enden der Reihe von Bodenbearbeitungsgliedern (3) eine aufwärts gerichtete Platte (11, 11A, 11A') zumindest im wesentlichen parallel zur Arbeitsrichtung (A) angeordnet ist, die zur Krümelung des Bodens im Betrieb mit den Zinken des äußeren der Reihe von Bodenbearbeitungsgliedern (3) zusammenwirkt, wobei die Platte als Ganzes relativ zu dem Gestellteil zu verstellen ist, wobei die Platte quer zur Arbeitsrichtung der Maschine gesehen breiter ist als das Bearbeitungsglied, mit dem sie zusammenwirkt, und wobei die Platte relativ zu der übrigen Maschine in vertikaler und horizontaler Richtung bewegbar ist, wobei die Maschine eine Stützwalze (10) zum Verändern der Arbeitstiefe der Maschine aufweist, und wobei die Maschine ferner ein Wechselgetriebe aufweist, mittels dessen die Drehgeschwindigkeit der Bodenbearbeitungsglieder zu verändern ist,
dadurch gekennzeichnet, daß die Platte (11, 11A, 11A') an einer Stützplatte (13) angebracht und relativ zu dieser innerhalb einer vertikalen oder im wesentlichen vertikalen Ebene höhenverstellbar ist, wobei eine Stellvorrichtung vorgesehen ist, mittels der die Platte, die an ihrer Rückseite eine nach innen gerichtete Führung (18, 18') aufweist, unabhängig von ihrer Höhenverstellbarkeit parallel oder im wesentlichen parallel zur Arbeitsrichtung relativ zu der Stützplatte auch nach vorn oder nach hinten in mehrere Positionen einzustellen und darin zu verriegeln ist.

2. Bodenbearbeitungsmaschine nach Anspruch 1,
dadurch gekennzeichnet, daß die Stützplatte (13) mehrere Bohrungen (16) aufweist, die in einer sich in Arbeitsrichtung erstreckenden Reihe angeordnet sind.

## Revendications

1. Machine pour cultiver le sol comprenant une pluralité d'organes de travail du sol (3) disposés en une rangée, chacun d'eux étant muni de deux dents s'étendant vers le bas qui sont entraînées par un moteur au moyen d'engrenages (43) disposés dans une partie de châssis (1) en étant placés côte-à-côte en une rangée qui s'étend transversalement au sens de marche (A) du travail de la machine, lesquels organes de travail du sol (3) sont rotatifs autour d'axes (2) dirigés vers le haut, tandis que sur chacune des deux extrémités de la rangée d'organes de travail du sol (3) est prévue une plaque (11, 11A, 11A') s'étendant vers le haut disposée au moins sensiblement parallèlement au sens de marche (A) du travail, laquelle plaque coopère avec les dents de l'organe de travail du sol (3) situé le plus à l'extérieur dans la rangée pendant le travail de manière à obtenir un émiettage du sol, laquelle plaque peut être écartée dans son ensemble par rapport à la partie de châssis, la plaque ayant, en étant vue transversalement au sens de marche du travail de la machine, une largeur excédant la largeur de l'organe de travail avec lequel ladite plaque coopère, la plaque étant mobile verticalement et horizontalement par rapport au reste de la machine, la machine étant munie d'un rouleau de support (10) afin de changer la profondeur de travail de la machine, ladite machine étant munie en outre d'un variateur de vitesse par lequel la vitesse desdits organes de travail du sol peut être changée,
**caractérisée** en ce que la plaque (11, 11A, 11A') est montée sur une plaque de support (13) et est réglable verticalement par rapport à ladite plaque de support (13) dans un plan vertical ou sensiblement vertical, des moyens de réglage étant prévus, au moyen desquels la plaque qui est munie sur son côté postérieur d'un moyen de guidage (18, 18') dirigé vers l'intérieur, peut aussi être réglée par rapport à ladite plaque de support en une pluralité de positions et y être fixée, vers l'avant ou vers l'arrière, indépendamment de ladite possibilité de réglage vertical, parallèlement ou sensiblement parallèlement au sens de marche du travail.

2. Machine pour cultiver le sol selon la revendication 1,
caractérisée en ce que la plaque de support (13) est munie d'un certain nombre d'ouvertures (16) situées en une rangée s'étendant dans le sens de marche du travail.
